# EUROPEAN PATENT SPECIFICATION

(11) **EP 0 949 793 B1**
(45) Date of publication and mention of the grant of the patent: **12.05.2004**
(21) Application number: 99302422.3
(22) Date of filing: 29.03.1999
(51) Int. Cl.: H04M 3/523

(54) **Optimizing call-center performance by using predictive data to distribute agents among calls**
Optimierung der Anrufverteilung mit Hilfe von prädiktiven Daten zum Verteilen von Bearbeitern auf Anrufen
Optimisation de la performance d'un centre d'appel en utilisant des données prédictives pour distribuer des opérateurs entre des appels

(30) Priority: 03.11.1998 US 185265; 09.04.1998 US 57842
(43) Date of publication of application: 13.10.1999
(73) Proprietor: LUCENT TECHNOLOGIES INC., Murray Hill, New Jersey 07974-0636 (US)
(72) Inventor: Bogart, Frank J., Boulder, Colorado 80301 (US); Flockhart, Andrew D., Thornton, Colorado 80241 (US); Foster, Robin H., Little Silver, New Jersey 07739 (US); Kohler, Joylee E., Northglenn, Colorado 80234 (US); Mathews, Eugene P., Barrington, Illinois 60010 (US); Skarzynski, Stephen L., Niwot, Colorado 80503 (US)
(74) Representative: Williams, David John

(56) References cited:
- EP-A- 0 740 450
- EP-A- 0 817 455
- WO-A-92/09164
- HASSLER K W ET AL: "REVOLUTIONIZING DEFINITY CALL CENTERS IN THE 1990S" AT & T TECHNICAL JOURNAL, vol. 74, no. 4, 1 July 1995 (1995-07-01), pages 64-73, XP000517580 ISSN: 8756-2324

## Description

This invention relates to methods of, and apparatus for, selecting a call for handling by a call handler.

Automatic call distribution /(ACD)systems distribute calls ― whether inbound or outbound -for handling to any suitable ones of available call-handling agents according to some predefined criteria. In many existing systems, such as the Lucent Technologies Definity® ACD system, the criteria for handling the call from the moment that the ACD system becomes aware of the call until the call is connected to an agent are customer-specifiable (i.e., programmable by the operator of the ACD system) via a capability called call vectoring. Normally in present-day ACD systems, when the ACD system's controller detects that an agent has become available to handle a call, the controller identifies all predefined call-handling skills of the agent (usually in some order of priority) and delivers to the agent the highest-priority oldest-waiting call that matches the agent's highest-priority skill. Generally the only condition that results in a call not being delivered to an available agent is that there are no calls waiting to be handled.

Most present-day call-distribution algorithms focus on being "fair" to callers and to agents. This fairness is reflected by the standard first-in, first-out call to most-idle-agent assignment algorithm. Skills-based routing improves upon this basic algorithm in that it allows each agent to be slotted into a number of categories (splits) based on the agent's skill types and levels.

The primary objective of call-distribution algorithms is to ultimately maximize call center performance. That may involve minimizing cost, maximizing call throughput, and/or maximizing revenue, among others. For example, when a new call arrives, the call should be handled by an agent who either has the ability to produce the most revenue or can handle the call in the shortest amount of time. Also, when an agent becomes available to handle a new call, the agent should handle either the call that has the possibility of generating the most revenue or the call which the agent is most efficient in handling. A telephone call-handling system having such functionality is disclosed in U.S. Patent No. 5,299,260 (WO 9209164A). However, this system is limited in its capabilities to truly maximize call center performance: it permits only one criterion or metric to be used at any one time to select an agent for handling an individual call, while call center performance is typically a multi-faceted function that involves a number of criteria or metrics. K.W. Hassler et al., "Revolutionizing DEFINITY ® Call Centers in the 1990s", AT&T Technical Journal, vol. 74, no. 4 (July/August 1995), XP000517580 ISSN 8756-2324, pp. 64-73, describes an Expert Agent Selection (EAS) feature that allows classification of incoming call types by caller needs and then matching these calls' skill needs with the particular skills of agents who have unique attributes and levels of expertise or call preference. Agents are assigned a skill type of "primary" for calls in which they are highly experienced or have a preference for handling. Agents are assigned a skill type of "secondary" for call types in which they are less experienced in handling or for which they serve as a back-up for other agents. Agents only receive calls for secondary skills if there are no calls waiting for their primary skill(s). The EAS skill-matching algorithm distributes an incoming call to the appropriate call queue(s) based on the skill(s) needed by the caller. Then, it directs the call to an agent assigned with a skill that matches at least one of the caller's needs by carrying out a best-fit matching of the incoming call's needs to the available agents who have the required skills.

According to one aspect of this invention there is provided a method as claimed in claim 1.

According to another aspect of this invention there is provided apparatus as claimed in claim 9.

A call is selected for handling by a call handler (e.g., a call center agent) as follows. When a call handler who handles calls of a plurality of types (e.g., calls needing different ones of a plurality of agent skills for their handling) becomes available, a call type for which the call handler has a best present performance characteristic is selected for handling by the call handler. A measure of "best" may be absolute or relative. For example, a "best" characteristic may be the highest characteristic, or it may be a characteristic that most-closely matches (e.g., minimally exceeds) the call's requirements. The determination of the available call for which the call handler has the best performance characteristic is made as follows. A service profile comprising present values of a plurality of service metrics for the plurality of call types is maintained for the call handler. The present values of the plurality of service metrics for each call type having calls available for handling by the call handler are retrieved from the call handler's service profile and are used in one of a plurality of formulas, each corresponding to a different call type, to obtain a performance characteristic score for each of the call types of available calls. Then the one of the available calls for whose call type the call handler has the best score is selected for handling by the call handler. When the call handler finishes handling the selected call, the call handler's performance in handling the selected call is evaluated (quantitatively and/or qualitatively), and the present values of the call handler's service metrics are modified by the valuation to obtain new present values of the service metrics for the call type of the selected call for the call handler. Preferably, the modifications are weighted to give more weight to performance evaluations of calls most-recently handled by this call handler. Then the new present values of the service metrics of the call handler are used in selecting a call for handling by the call handler, until that call type is again selected and the above procedure is repeated. Also, for other call handlers, their own performance characteristic scores for individual call types are used in selecting calls for them to handle.

Alternatively, a call handler who has a best present performance characteristic for a call type of an available call is determined and selected to handle the call as follows. A service profile comprising present values of a plurality of service metrics for that call type is maintained for each call handler. For each call handler who is available to handle the available call, the present values of the plurality of service metrics are retrieved from the call handler's service profile and are combined to obtain a performance characteristic score for each of the available call handlers. Also, a call score is obtained for the available call by combining present values of a plurality of characteristics of the call. Then the one of the available call handlers who has a characteristic score that best corresponds to (e.g., matches) the call's score is selected to handle the call. Similarly, a call for which a call handler has a best present performance characteristic is determined and selected for handling by the call handler as follows. A service profile comprising present values of a plurality of service metrics for a plurality of call types is maintained for the call handler. The present values of the plurality of service metrics for each call type having calls available for handling by the call handler are retrieved from the call handler's service profile and are combined to obtain a performance characteristic score for each of the call types of available calls. Also, a call score is obtained for a call of each available call type by combining present values of a plurality of characteristics of each said call. Then the one of the available calls that has a call score that best corresponds the call handler's characteristic score for that corresponding call type is selected for handling by the call handler.

While the method comprises the steps of the just-characterized procedure, the apparatus effects the method steps. The apparatus preferably includes an effector --any entity that effects the corresponding step, unlike a means-- for each step. Further, there is preferably provided a computer-readable medium containing software which, when executed in a computer, causes the computer to perform the method steps.

The invention tends to maximize call center performance. For example, when an agent becomes available to handle a new call, the agent is assigned to a call of a type from which this agent can maximize call center performance as measured by a plurality of metrics. Also, when a new call arrives, it goes to an agent who has the best ability to maximize call center performance as measured by the plurality of metrics. This allows for a multi-dimensional, and hence more accurate or refined, measure of call center performance. The invention takes into consideration each agent's historical performance for each call type that the agent handles. Yet, by revising the values of the agent's metrics at the end of every call handled by the agent, the invention automatically adjusts for long-term trends, such as the agent gaining experience and expertise, and short-term trends, such as the agent having "a bad day".

These and other features and advantages of the invention will become more apparent from the following description of an illustrative embodiment of the invention considered together with the drawing.

### Brief Description of the Drawing

FIG. 1 is a block diagram of a call center that includes an illustrative embodiment of the invention;
FIG. 2 is a flow diagram of operations performed by an agent service profile generator of the call center of FIG. 1; and
FIG. 3 is a flow diagram of agent-selection operations performed by an agent and call selector of the call center of FIG. 1;
FIG. 4 is a flow diagram of call-selection operations performed by the agent and call selector of the call center of FIG. 1;
FIG. 5 is a flow diagram of altemative agent-selection operations performed by the agent and call selector of the call center of FIG. 1; and
FIG. 6 is a flow diagram of alternative call-selection operations performed by the agent and call selector of the call center of FIG. 1.

### Detailed Description

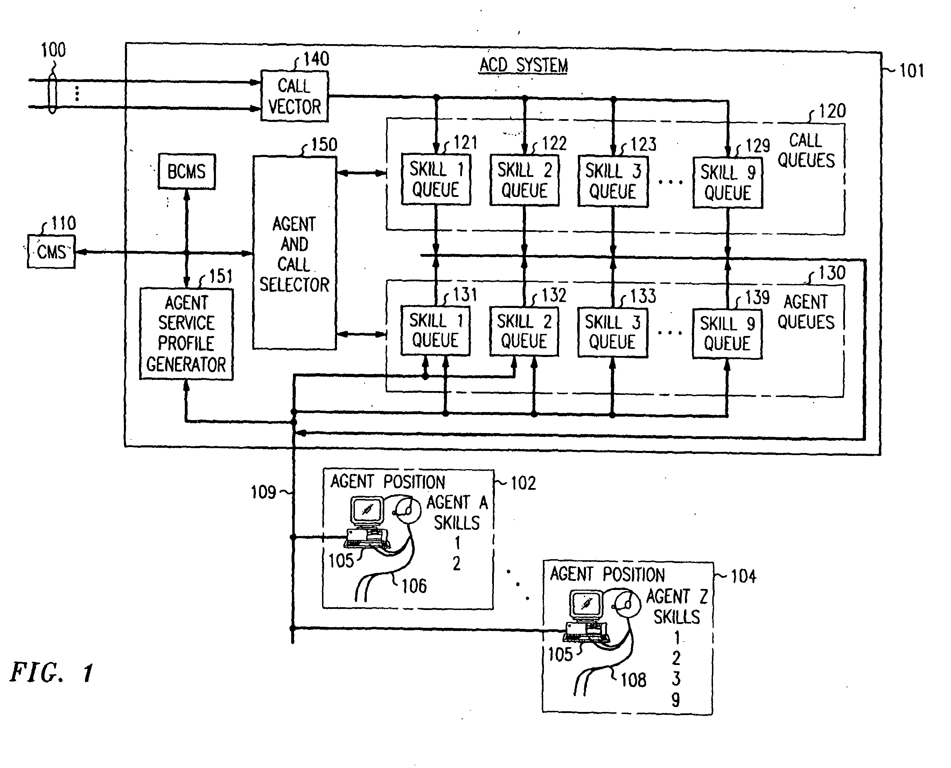

FIG. 1 shows an illustrative call center. As is conventional, the call center comprises a plurality of telephone lines and/or trunks 100 selectively interconnected with a plurality of agent positions 102-104 via an ACD system 101. Each agent position 102-104 includes a voice-and-data terminal 105 for use by a corresponding agent 106-108 in handling calls. Terminals 105 are connected to ACD system 101 by a voice-and-data transmission medium 109. Also, included in ACD system 101 is a conventional basic call management system (BCMS) and connected to ACD system 101 is a conventional call management system (CMS) 110 that gather call records and call-center statistics for use in managing the call center and in generating call-center reports. CMS and BCMS will hereafter be referred to jointly as CMS 110.

ACD system 101 is illustratively the Lucent Technologies Definity® private-branch exchange (PBX)-based ACD system. It is a stored-program-controlled system that conventionally includes interfaces to external communications links, a communications switching fabric, service circuits (e.g., tone generators, announcement circuits, etc.), memory for storing control programs and data, and a processor (i.e., a computer) for executing the stored control programs to control the interfaces and the fabric and to provide automatic call-distribution functionality. Included among the data stored in ACD system 101 are a set 120 of call queues and a set 130 of agent queues. Each call queue 121-129 corresponds to a different agent skill, as does each agent queue 131-139. Conventionally, calls are prioritized, and either are enqueued in individual ones of call queues 120 in their order of priority or are enqueued in different ones of a plurality of call queues that correspond to a skill and each one of which corresponds to a different priority. Likewise, each agent's skills are prioritized according to his or her level of expertise in that skill, and either agents are enqueued in individual ones of agent queues 130 in their order of expertise level or are enqueued in different ones of a plurality of agent queues that correspond to a skill and each one of which corresponds to a different expertise level. Included among the control programs in ACD system 101 is a call vector 140. Calls incoming to the call center on lines or trunks 100 are assigned by call vector 140 to different call queues 121-129 based upon the agent skill that they require for their proper handling. Agents 106-108 who are available for handling calls are assigned to agent queues 131-139 based upon the skills which they possess. An agent may have multiple skills, and hence may be assigned to multiple agent queues 131-139 simultaneously. Furthermore, an agent may have different levels of skill expertise (e.g., skill levels 1-16 in one known system or merely primary (P) skills and secondary (S) skills in another known system), and hence may be assigned to different agent queues 131-139 at different expertise levels. Call vectoring is described in DEFINITY® Communications System Generic 3 Call Vectoring/Expert Agent Selection (EAS) Guide, AT&T publication no. 555-230-520 (Issue 3, Nov. 1993). Skills-based ACD is described in further detail in U. S. Patent no. 5,206.903.

Included among the programs executing on ACD system 101 are an agent and call selector 150 and an agent service-profile generator 151. Selector 150 and generator 151 are stored either in the main memory or in a peripheral memory (e.g., disk, CD-ROM, etc.) or some other computer-readable medium of ACD system 101. Selector 150 and generator 151 effect an assignment between available calls and available agents in away that tends to maximize the efficiency of the call center.

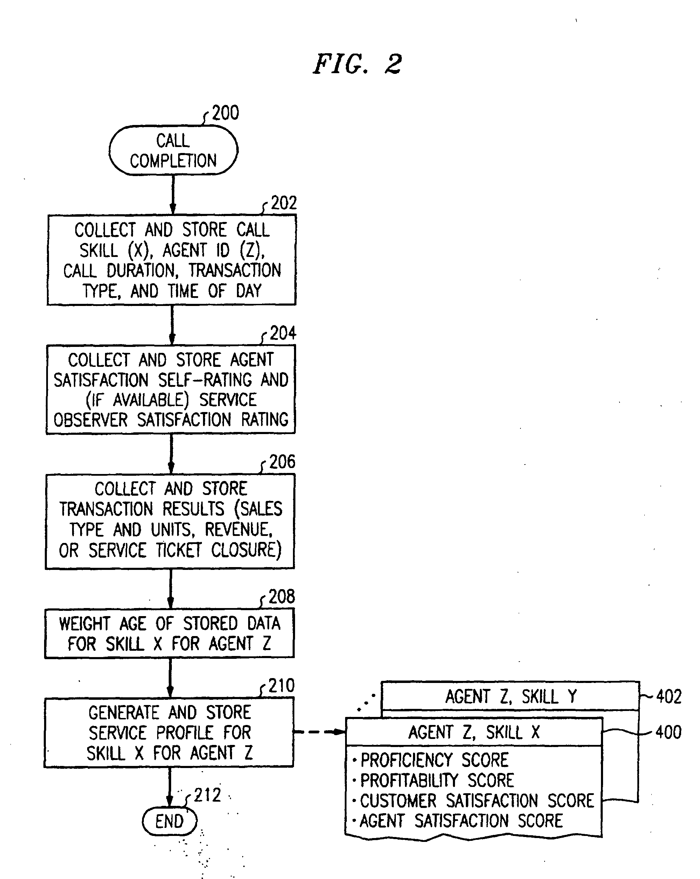

The functionality of generator 151 is shown in FIG. 2. At the completion of handling of each call, at step 200, generator 151 collects efficiency metrics for the call, at steps 202-206. From the PBX on which ACD system 101 is based, generator 151 collects data such as the skill (X) involved in handling the call, the identifier of the agent (Z) who handled the call, the call duration, the transaction type (e.g., catalog sale, information request, complaint, etc.), the time-of-day, and call wait time or agent wait time, and stores this information in a database, such as CMS 110, at step 202. From the agent's terminal 105, generator 151 collects and stores the agent's self-rating (which the agent entered on his or her terminal) of how well the agent is satisfied with how he or she handled the call, at step 204. Also, if the handling of the call was observed by a service observer (e.g., either was monitored by a supervisor of the call center, or the non-agent party involved in the call was queried by an interactive voice response system for an evaluation of the service received), generator 151 collects and stores the service observer's satisfaction rating, also at step 204. From the agent's terminal 105 (or from a host computer to which the agent's terminal 105 reports transaction data), generator 151 collects and stores the transaction results (e.g., type of sale and number of units sold, or revenue generated, or service ticket closure or escalation, etc.), depending on the transaction type, at step 206. Generator 151 then weights the age of the stored data for skill X for agent Z for this call and previous calls, at step 208. Weighting favors data obtained from most-recent calls over data obtained from calls in the more-distant past. This enables the weighting to strongly reflect present agent performance, as agent performance may change over time due to, for example, an agent becoming more proficient, or "burned out", or having a "good day" or a "bad day". For example, the agent's data from handling all previous calls of skill X is given a weight of 75%, and the data from the just-completed call is given a weight of 25%. Generator 151 then uses the weighted data to generate, or regenerate, a service profile 400 for skill X for agent Z, at step 210. A service profile is a set of scores for a set of metrics, e.g., an expertise score, a proficiency score, a profitability score, a customer satisfaction score, an agent satisfaction score, an agent occupancy score, agent wait time, priority of the call type to the agent or to the call center, and an indication of the percentage of the agent's work that this call type should represent versus how much it actually represents, etc. ACD system 101 has a profile for each skill of each agent. Therefore, there typically exists a plurality of profiles 400-402 for each agent. Generator 151 stores the generated service profile 400 along with the agent's other profiles in a database such as CMS 110, at step 210, and then ends its operation, at step 212.

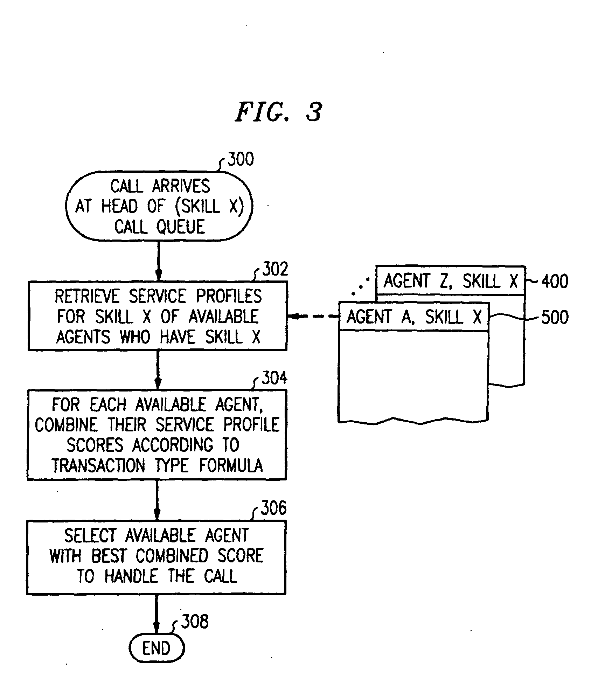

The functionality of agent and call selector 150 in selecting an agent for a call is shown in FIG. 3. Upon arrival of a call at the head of one of the call queues 120 (e.g., a skill X call queue), at step 300, selector 150 retrieves the service profiles 400-500 for skill X of all agents who are available to handle the call and who have skill X, at step 302. Preferably, at step 302 selector 150 retrieves the service profiles not only for agents who are actually idle and enqueued in the skill X agent queue, but also for those agents who ACD system 101 anticipates will become idle within a predetermined amount of time (e.g., a few seconds). Then, for each of the agents whose service profile it retrieved at step 302, selector 150 combines the agent's service profile scores according to a formula which is a function of the transaction type represented by the arrived call, at step 304. The formula for each call type is administered (programmed) into the system and may be either algorithm-based (procedural) or rules-based (expert system engine). Each formula weights the agent's individual service profile scores based on the type of transaction represented by the arrived call. For example, in a complaint transaction, the service observer satisfaction rating is weighted heavily, whereas in a sales transaction the revenue is weighted heavily, and in an information request transaction the proficiency is weighted heavily. On the other hand, the formula for a VIP sales call (a sales call from a preferred customer) may weigh profitability less than customer satisfaction, in contrast to a "standard" sales call. A simple formula may normalize each score to a 100 point scale, weight each score by a multiplier, sum the weighted scores, and divide the sum by the maximum possible score. Selector 150 then selects the agent who has the best combined score to handle the call, at step 306. The "best" score may either be the highest score, or it may be a just-sufficient score. For example, if a score of "310" is needed and two agents, one with a score of "380" and the other with a score of "350" are available, the one agent has the "best" score according to the former test and the other agent has the "best" score according to the latter test. Optionally, selector 150 selects none of the available agents if none of the agents' combined scores reach a predetermined minimum threshold, and leaves the call waiting in queue for another agent to become available. Selector 150 then ends its operation, at step 308.

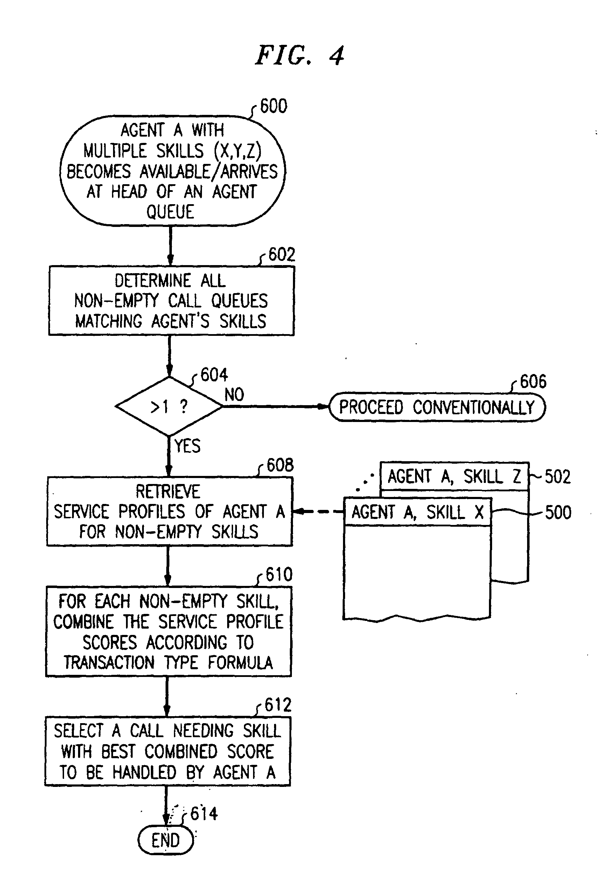

The functionality of agent and call selector 150 in selecting a call for an agent is shown in FIG. 4. Upon an agent becoming available or arriving at the head of one of the agent queues 130, at step 600, selector 150 determines which skills this idle agent possesses (e.g., skills X, Y, and Z) and which of those skills have non-empty corresponding call queues 121-129, at step 602. If the number of non-empty corresponding call queues 121-129 is none or one, as determined at step 604, selector 150 proceeds conventionally, at step 606, either enqueuing or leaving the idle agent enqueued in those agent queues 131-139 that correspond to the idle agent's skills if there are no non-empty corresponding call queues, or assigning a call from the one non-empty corresponding call queue to the idle agent and dequeuing the idle agent from all agent queues 130. If selector 150 determines at step 604 that there is a plurality of non-empty corresponding call queues 121-129, selector 150 retrieves the service profiles 500-502 of the idle agent for those skills that correspond to the non-empty call queues 121-129, at step 608. Then, for each of those skills' service profiles of the idle agent, selector 150 combines the service profile scores according to a formula which is a function of the transaction type represented by a call of that skill, at step 610. As was already stated in conjunction with FIG. 3, the - formula for each call type is administered (programmed) into the system and may be either algorithm-based (procedural) or rules-based (expert system engine). Selector 150 then selects a call needing the skill that has the best (either highest or just-sufficient) combined score to be handled by the idle agent, at step 612. Optionally, selector 150 selects none of the available calls if none of the agent's combined scores reach a predetermined minimum threshold, and leaves the agent waiting in queue for a call of another skill type to become available. Selector 150 then ends its operation, at step 614.

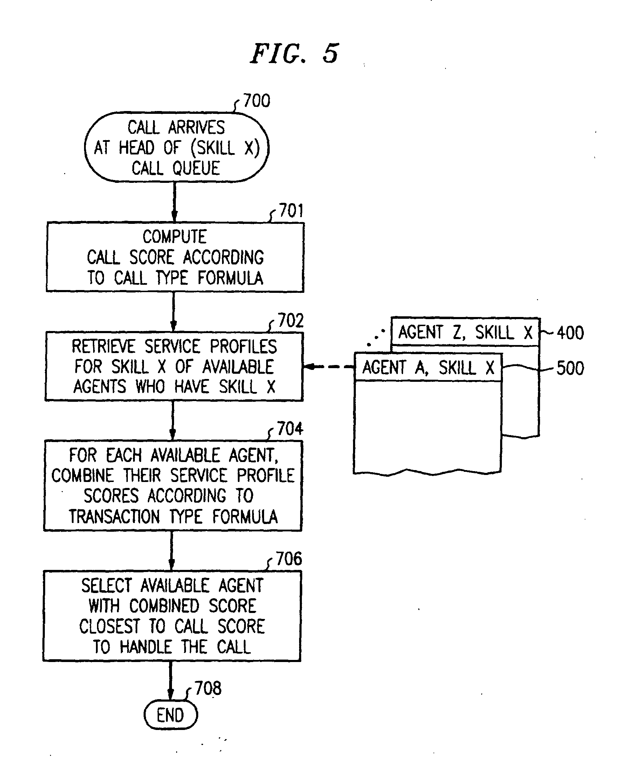

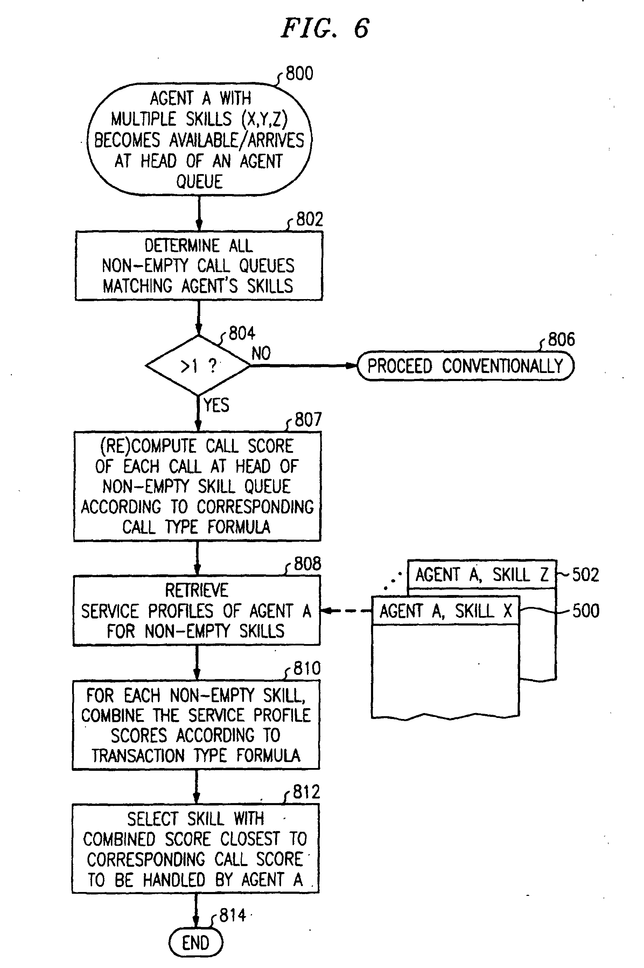

Of course, it is not necessary that only agents should have corresponding profiles and scores computed therefrom. The same may advantageously be done for calls, and the scores of the agents may then be matched with the scores of the calls to determine which agent should handle what call. This variation is shown in FIGS. 5 and 6.

The functionality of agent and call selector 150 in selecting an agent for a call is shown in FIG. 5, which is a variation on FIG. 3. Upon arrival of a call at the head of its queue, at step 700, selector 150 computes a call score for the call according to a call-type formula, at step 701. The computation is illustratively made on the basis of factors such as the purpose of the call (determined from the vector directory number of the call, or the skill queue 120-129 in which the call resides), the in-queue wait time of the call (either actual or predicted), the priority of the call, the caller's ID (such as the ANI or account number), the caller's. history (call history or caller's total business history), etc. Typically, the formulas for all call types would be, although they need not be, the same. A simple formula may normalize each factor on a 100 point scale, weight each normalized factor by a multiplier, sum the weighted factors, and divide the sum by the maximum possible score.

Having obtained a call score for the call, agent and call selector 150 proceeds at steps 702-704 to obtain a score for each of the available agents who can handle the call, as at steps 302-304 of FIG. 3. Selector 150 then selects the agent who has the best combined score―in this instance, the agent whose combined score is closest to the call's score―to handle the call, at step 706. Preferably, selector 150 selects the agent whose combined score is closest to the call's score, whether it is higher or lower, within a predetermined range around the call's score, and if no agent is available within this range, selects an agent whose combined score least exceeds the call's score. Selector 150 then ends its operation, at step 708.

The functionality of agent and call selector 150 in selecting a call for an agent is shown in FIG. 6, which is a variation on FIG. 4. Upon an agent becoming available, selector 150 proceeds, at steps 800-808, in the same manner as at steps 600-606 of FIG. 4. If there are calls in multiple call queues 120-129 for the agent to choose from, selector 150 recomputes (updates) the call score for the call at the head of each of those queues according to a call type formula, at step 807, in the manner described for step 701 of FIG. 5. Selector 150 then proceeds, at steps 808-810, to obtain a score for each of the skills of the agent that correspond to the available calls, as at steps 608-610 of FIG. 4. Selector 150 then selects a call of the skill that has the best combined score-in this instance, the call whose score is closest to the agent's combined score for that call type―to be handled by the agent, at step 812, and ends its operation, at step 814.

Of course, various changes and modifications to the illustrative embodiment described above will be apparent to those skilled in the art. For example, the loci of various data and functions are not important and may be changed at will; for example, skill and agent profiles and the agent service profile generator and the agent selector may be located in an adjunct processor. Nor do the profiles need to be updated in real time; such updating may be done only periodically. Also, the call queues and the agent queues may be distributed across a network of multiple ACDs. In this case, preference to distribute calls to other ACDs' agents may affect individual agent profiles, such as when one ACD site is presently working on an overtime-basis while another ACD site is in a different time zone and presently working standard hours. Or, profile weighting can vary depending on present business needs or priorities derived from some external source of customer information. Moreover, if the overall proficiency of a set of agents is judged to need improvement, the agents may be given remedial training, and upon their retum to active duty, agents with lower proficiency values may be selected to provide immediate opportunities to apply the remedial training. Also, the service profile scores of all agents may be compared, and the call may remain enqueued if an agent with a high-enough service profile score is predicted to become available shortly. The prediction may illustratively be based on what part of a telescript (a script followed by the agent in handling a call) the agent is presently performing. Furthermore, the system may dynamically change the weighting of individual profile scores or even the score-combining formula to reflect present operating conditions of the call center. For example, it may be that customers with low scores (e.g., grumpy people who seldom buy) need agents with high scores (e.g., very patient, positive, versatile agents) and agents with low scores (e.g., agents with little experience or only average people skills) may be assigned to customers with high scores (e.g., easygoing people who buy frequently). Such changes and modifications can be made within the scope of the invention and without diminishing its attendant advantages. It is therefore intended that such changes and modifications be covered by the following claims except insofar as limited by the prior art.

## Claims

1. A method of selecting a call for handling by a call handler, comprising the steps of:
in response to availability (800) of a call handler who handles calls of a plurality of types, selecting for handling by the call handler a call of one of the plurality of types, comprising
(a) selecting for handling by the call handler a call of a type for which the call handler has a best performance characteristic score,
b) in response to completion (200) of handling of the selected call by the call handler, evaluating (204-206) the call handler's performance in handling the selected call; and
c) modifying the call handler's performance characteristic score by the valuation of the call handler's performance in handling the call,
**CHARACTERISED IN THAT**
selecting comprises
retrieving (608; 808) from a service profile (500-502) of the call handler, comprising present values of a plurality of service metrícs for the plurality of call types, the service metrics for each call type having calls available (802) for handling by the call handler,
obtaining (610; 807, 810) a performance characteristic score for said each call type by using the retrieved present values of the plurality of service metrics of said each call type in one of a plurality of formulas, each corresponding to a different said call type, and
selecting (612; 812) one of the available calls whose call type has a best said score, for handling by the call handler; and
modifying comprises
modifying (208-210) the values of the call handler's service metrics for the call type of the selected call by the valuation of the call handler's performance in handling the selected call to obtain new present values of the service metrics for the call type of the selected call for the call handler.

2. The method of claim 1 wherein:
obtaining a performance characteristic score for said each call type comprises
combining (810) the retrieved present values of the plurality of service metrics of said each call type, and
obtaining (807) a call score for each said call by combining present values of a plurality of characteristics of each said call; and
selecting comprises
selecting (812) one of the available calls whose call score best corresponds to the call handler's characteristic score to be handled by the call handler.

3. The method of claim 1 wherein:
the step of evaluating comprises the step of
measuring (204-206) individual said service metrics of the service profile of the one call handler in handling the call, to obtain measured values;
the step of modifying comprises the steps of
combining (208-210) the measured values of the service metrics with the values of the service metrics of the service profile to obtain new values of the service metrics of the service profile.

4. The method of claim 3 wherein:
the step of combining comprises the steps of
weighting (208) the measured values of the service metrics relative to the values of the service metrics of the service profile; and
combining (210) the weighted measured values with the values of the service metrics of the service profile to obtain new values of the service metrics of the service profile.

5. The method of claim 1 wherein:
the performance characteristic score of an individual call type indicates at least one of efficiency of the one call handler in handling a call of the individual type, benefit generated by the call handler in handling a call of the individual type, and revenue.

6. The method of claim 1 wherein:
the service metrics of the service profile comprise at least one of efficiency, generated benefit, customer satisfaction, and call handler satisfaction.

7. The method of claim 1 wherein:
the step of selecting comprises either (a) the steps of
computing (810) a call score for each said call type having calls available for handling by the call handler, and
selecting (812) one of the available calls whose call type has the performance characteristic score best matching the call score of said call type; or (b) the steps of
computing (610) a call score for a call of each said call type having calls available for handling by the call handler, and
selecting (612) one of the available calls whose call score best matches the performance characteristic score of the corresponding call type.

8. The method of claim 2 wherein:
the step of combining comprises the step of
using (810) the retrieved present values of the plurality of service metrics of said each call type in one of a plurality of formulas, each corresponding to a different said call type.

9. An apparatus adapted to respond to availability (800) of a call handler who handles calls of a plurality of types by selecting for handling by the call handler a call of one of the plurality of types, comprising
a) means for selecting for handling by the call handler a call of a type for which the call handler has a best performance characteristic score,
b) means responsive to completion (200) of handling of the selected call by the call handler, for evaluating (204-206) the call handler's performance in handling the selected call; and
c) means for modifying the call handler's performance characteristic score by the valuation of the call handler's performance in handling the call, **CHARACTERISED IN THAT**
selecting means comprise
means for retrieving (608; 808) from a service profile (500-502) of the call handler, comprising present values of a plurality of service metrics for the plurality of call types, the service metrics for each call type having calls available (802) for handling by the call handler,
means for obtaining (610; 807, 810) a performance characteristic score for said each call type by using the retrieved present values of the plurality of service metrics of said each call type in one of a plurality of formulas, each corresponding to a different said call type, and
means for selecting (612; 812) one of the avaliable calls whose call type has a best said score, for handling by the call handler; and
modifying means comprise
means for modifying (208-210) the values of the call handler's service metrics for the call type of the selected call by the valuation of the call handler's performance in handling the selected call to obtain new present values of the service metrics for the call type of the selected call for the call handler.

10. The apparatus of claim 9 adapted for performing the method of one of claims 1 to 8.

## Patentansprüche

1. Ein Verfahren zum Selektieren eines Rufs zum Handhaben durch einen Rufhandhaber, umfassend die Schritte:
unter Ansprechen auf die Verfügbarkeit (800) eines Rufhandhabers, welcher Rufe einer Vielzahl von Typen handhabt, Auswählen eines Rufs von einem Typ aus der Vielzahl von Typen zum Handhaben durch den Rufhandhaber, umfassend
a) zum Handhaben durch den Rufhandhaber Auswählen eines Rufs von einem Typ, für den der Rufhandhaber eine Bestnote in Bezug auf die Leistungscharakteristik besitzt;
b) unter Ansprechen auf die Vollendung (200) des Handhabens des ausgewählten Rufs durch den Rufhandhaber Bewerten (204-206) der Leistung des Rufhandhabers beim Handhaben des ausgewählten Rufs; und
c) Modifizieren der Note der Leistungscharakteristik des Rufhandhabers durch die Einschätzung der Leistung des Rufhandhabers beim Handhaben des Rufs,
**gekennzeichnet dadurch, dass**
das Auswählen
ein Abrufen (808; 808) aus einem Dienstprofil (500-502) des Rufhandhabers, welches momentane Werte einer Vielzahl von Dienstmaßen für die Vielzahl von Ruftypen umfasst, der Dienstmaße für jeden Ruftyp mit Rufverfügbarkeit (802) zum Handhaben durch den Rufhandhaber umfasst,
ein Erlangen (610; 807, 810) einer Note der Leistungscharakteristik für jeden besagten Ruftyp umfasst, unter Verwendung der abgerufenen momentanen Werte der Vielzahl der Dienstmaße von jedem besagten Ruftyp in einer aus einer Vielzahl von Formeln, welche jeweils einem unterschiedlichen Ruftyp entspricht, und
ein Auswählen (612; 812) eines der verfügbaren Rufe umfasst, dessen Ruftyp eine Bestnote besitzt zum Handhaben durch den Rufhandhaber, und
das Modifizieren
ein Modifizieren (208-210) der Werte der Dienstmaße des Rufhandhabers für den Ruftyp des ausgewählten Rufs durch die Einschätzung der Leistung des Rufhandhabers beim Handhaben des ausgewählten Rufs umfasst, um neue momentane Werte der Dienstmaße für den Ruftyp des ausgewählten Rufs für den Rufhandhaber zu erlangen.

2. Das Verfahren nach Anspruch 1,
bei welchem das Erlangen einer Note in Bezug auf die Leistungscharakteristik für jeden besagten Ruftyp
ein Kombinieren (810) der abgerufen momentanen Werte der Vielzahl der Dienstmaße für jeden besagten Ruftyp umfasst, und
ein Erlangen (807) einer Rufnote für jeden besagten Ruf durch Kombinieren momentaner Werte einer Vielzahl von Charakteristika für jeden besagten Ruf umfasst; und
das Auswählen
ein Auswählen (812) eines der verfügbaren Rufe umfasst, dessen Rufnote am besten der charakteristischen Note des Rufhandhabers entspricht, zum Handhaben durch den Rufhandhaber.

3. Das Verfahren nach Anspruch 1, bei welchem:
der Schritt des Bewertens den Schritt
des individuellen Messens (204-206) der Dienstmaße des Dienstprofils des einen Rufhandhabers beim Handhaben des Rufes umfasst, um gemessene Werte zu erhalten;
der Schritt des Modifizierens die Schritte
eines Kombinierens (208-210) der gemessenen Werte der Dienstmaße mit den Werten der Dienstmaße des Dienstprofils umfasst, um neue Werte der Dienstmaße des Dienstprofils zu erhalten.

4. Das Verfahren nach Anspruch 3, bei welchem:
der Schritt des Kombinierens die Schritte
eines Gewichtens (208) der gemessenen Werte der Dienstmaße relativ zu den Werten der Dienstmaße des Dienstprofils umfasst; und
eines Kombinierens (210) der gewichteten gemessenen Werte mit den Werten der Dienstmaße des Dienstprofils umfasst, um neue Werte der Dienstmaße des Dienstprofils zu erhalten.

5. Das Verfahren nach Anspruch 1, bei welchem:
die Note der Leistungscharakteristik eines individuellen Ruftyps hinsichtlich einer Effizienz des einen Rufhandhabers beim Handhaben eines Rufs des individuellen Typs, eines durch den Rufhandhaber beim Handhaben des Rufs des individuellen Typs erzeugten Nutzens und eines Ertrages wenigstens eines anzeigt.

6. Das Verfahren nach Anspruch 1, bei welchem:
die Dienstmaße des Dienstprofils hinsichtlich einer Effizienz, einem erzeugten Nutzen, einer Kundenzufriedenheit und einer Rufhandhaberzufriedenheit zumindest eines umfassen.

7. Das Verfahren nach Anspruch 1, bei welchem:
der Schritt des Auswählens entweder a) die Schritte
eines Berechnens (810) einer Rufnote für jeden besagten Ruftyp mit zum Handhaben durch den Rufhandhaber verfügbaren Rufen und
eines Auswählens (812) eines der verfügbaren Rufe umfasst, dessen Ruftyp die Note in Bezug auf die Leistungscharakteristik besitzt, die am besten mit der Rufnote dieses Ruftyps übereinstimmt; oder b) die Schritte
eines Berechnens (610) einer Rufnote für einen Ruf von jedem besagten Ruftyp mit zum Handhaben durch den Rufhandhaber verfügbaren Rufen, und
eines Auswählens (612) eines der verfügbaren Rufe umfasst, dessen Rufnote am besten mit der Note in Bezug auf die Leistungscharakteristik des entsprechenden Ruftyps übereinstimmt.

8. Das Verfahren nach Anspruch 2, bei welchem:
der Schritt des Kombinierens den Schritt
eines Verwendens (810) der abgerufenen momentanen Werte der Vielzahl der Dienstmaße von jedem besagten Ruftyp in einer von einer Vielzahl von Formeln, welche jeweils einem unterschiedlichen besagten Ruftyp entsprechen, umfasst.

9. Eine Vorrichtung ausgebildet, um auf die Verfügbarkeit (800) eines Rufhandhabers, der Rufe einer Vielzahl von Typen handhabt, anspricht, und zwar durch Auswählen eines Rufes aus einer Vielzahl von Typen zum Handhaben durch den Rufhandhaber, umfassend
a) Mittel zum Auswählen eines Rufes eines Typs zum Handhaben durch den Rufhandhaber, für welchen der Rufhandhaber eine Bestnote in Bezug auf die Leistungscharakteristik besitzt,
b) Mittel, die auf eine Vervollständigung (200) des Handhabens des ausgewählten Rufs durch den Rufhandhaber ansprechen, und zwar zum Bewerten (204-206) der Leistung des Rufhandhabers beim Handhaben des ausgewählten Rufs; und
c) Mittel zum Modifizieren der Note der Leistungscharakteristik des Rufhandhabers durch die Einschätzung der Leistung des Rufhandhabers beim Handhaben des Rufes, **gekennzeichnet dadurch, dass**
die auswählenden Mittel umfassen:
Mittel zum Abrufen (608; 808) aus einem Dienstprofil (500-502) des Rufhandhabers, welches momentane Werte einer Vielzahl von Dienstmaßen für die Vielzahl von Ruftypen umfasst,
der Dienstmaße für jeden Ruftyp, der zum Handhaben durch den Rufhandhaber verfügbare (802) Rufe besitzt,
Mittel zum Erlangen (610; 807, 810) einer Note in Bezug auf die Leistungscharakteristik für jeden besagten Ruftyp unter Verwendung der abgerufenen momentanen Werte der Vielzahl von Dienstmaßen von jedem besagten Ruftyp in einer von einer Vielzahl von Formeln, welche jeweils einem unterschiedlichen besagten Ruftyp entsprechen, und
Mittel zum Auswählen (612; 812) eines der verfügbaren Rufe, dessen Ruftyp eine Bestnote besitzt, zum Handhaben durch den Rufhandhaber und
die Modifizierungsmittel umfassen:
Mittel zum Modifizieren (208-210) der Werte der Dienstmaße des Rufhandhabers für den Ruftyp des ausgewählten Rufs durch Einschätzung der Leistung des Rufhandhabers beim Handhaben des ausgewählten Rufs, um neue momentane Werte der Dienstmaße für den Ruftyp des ausgewählten Rufs für den Rufhandhaber zu erhalten.

10. Die Vorrichtung nach Anspruch 9, angepasst zum Durchführen des Verfahrens nach einem der Ansprüche 1 bis 8.

## Revendications

1. Procédé de sélection d'un appel destiné à être géré par un gestionnaire d'appel, comprenant les étapes qui consistent à :
en réponse à la disponibilité (800) d'un gestionnaire d'appel qui gère des appels d'une pluralité de types, sélectionner pour la gestion par le gestionnaire d'appel un appel de l'un de la pluralité de types, consistant à :
(a) sélectionner pour la gestion par le gestionnaire d'appel un appel d'un type pour lequel le gestionnaire d'appel présente une meilleure note caractéristique de performances,
(b) en réponse à l'achèvement (200) de la gestion de l'appel sélectionné par. le gestionnaire d'appel, évaluer (204-206) les performances du gestionnaire d'appel pour gérer l'appel sélectionné ; et
(c) modifier la note caractéristique de performances du gestionnaire d'appel conformément à l'évaluation des performances du gestionnaire d'appel lors de la gestion de l'appel,
**caractérisé en ce que**
la sélection consiste à :
extraire (608 ; 808) d'un profil de service (500-502) du gestionnaire d'appel, comprenant des valeurs présentes d'une pluralité de métriques de service pour la pluralité de types d'appels, les métriques de service pour chaque type d'appel ayant des appels disponibles (802) pour la gestion par le gestionnaire d'appel,
obtenir (610 ; 807, 810) une note caractéristique de performances, pour chacun de ces types d'appels en utilisant les valeurs présentes extraites de la pluralité de métriques de service de chacun des types d'appels selon l'une d'une pluralité de formules correspondant chacune à un type d'appel différent, et
sélectionner (612 ; 812) l'un des appels disponibles dont le type d'appel a la meilleure note, pour la gestion par le gestionnaire d'appel ; et
la modification consiste à :
modifier (208-210) les valeurs des métriques de service du gestionnaire d'appel pour le type d'appel de l'appel sélectionné conformément à l'évaluation des performances du gestionnaire d'appel lors de la gestion de l'appel sélectionné pour obtenir de nouvelles valeurs présentes de la métrique de service pour le type d'appel de l'appel sélectionné pour le gestionnaire d'appel.

2. Procédé suivant la revendication 1, dans lequel :
l'obtention d'une note caractéristique de performances pour chacun des types d'appels consiste à :
combiner (810) les valeurs présentes extraites de la pluralité de métriques de service de chacun des types d'appels, et
obtenir (807) une note d'appel pour chacun des appels en combinant des valeurs présentes d'une pluralité de caractéristiques de chacun des appels ; et
la sélection consiste à :
sélectionner (812) l'un des appels disponibles dont la note d'appel correspond le mieux à la note caractéristique du gestionnaire d'appel pour la gestion par le gestionnaire d'appel.

3. Procédé suivant la revendication 1, dans lequel :
l'étape d'évaluation comprend l'étape consistant à :
mesurer (204-206) les métriques de service individuelles du profil de service du.gestionnaire d'appel considéré dans la gestion de l'appel, pour obtenir des valeurs mesurées ;
l'étape de modification comprend les étapes consistant à :
combiner (208-210) les valeurs mesurées des métriques de service aux valeurs des métriques de service du profil de service afin d'obtenir de nouvelles valeurs des métriques de service du profil de service.

4. Procédé suivant la revendication 3, dans lequel :
l'étape de combinaison comprend les étapes consistant à :
pondérer (208) les valeurs mesurées des métriques de service par rapport aux valeurs des métriques de service ; et
combiner (210) les valeurs mesurées pondérées aux valeurs des métriques de service du profil de service pour obtenir de nouvelles valeurs des métriques de service du profil de service.

5. Procédé suivant la revendication 1, dans lequel :
la note caractéristique de performances d'un type d'appel individuel indique au moins une efficacité du gestionnaire d'appel considéré dans la gestion d'un appel du type individuel, le bénéfice dégagé par le gestionnaire d'appel dans la gestion d'un appel du type individuel, et le revenu.

6. Procédé suivant la revendication 1, dans lequel :
les métriques de service du profil de service comprennent au moins l'un de l'efficacité, du bénéfice dégagé, de la satisfaction du client, et de la satisfaction du gestionnaire d'appel.

7. Procédé suivant la revendication 1, dans lequel :
l'étape de sélection comprend soit (a) les étapes consistant à :
calculer (810) une note d'appel pour chacun des types d'appels ayant des appels disponibles pour la gestion par le gestionnaire d'appel, et
sélectionner (812) l'un des appels disponibles dont le type d'appel a la note caractéristique de performances correspondant le mieux à la note d'appel du type d'appel ; soit(b) les étapes consistant à :
calculer (610) une note d'appel pour un appel de chacun des types d'appels ayant des appels disponibles pour la gestion par le gestionnaire d'appel, et
sélectionner (612) l'un des appels disponibles dont la note d'appel correspond le mieux à la note caractéristique de performances du type d'appel correspondant.

8. Procédé suivant la revendication 2, dans lequel :
l'étape de combinaison comprend les étapes consistant à :
utiliser (810) les valeurs présentes extraites de la pluralité de métriques de service de chaque type d'appel dans l'une d'une pluralité de formules, correspondant chacune à l'un des différents types d'appels.

9. Appareil apte à répondre à la disponibilité (800) d'un gestionnaire d'appel qui gère des appels d'une pluralité de types en sélectionnant pour la gestion par le gestionnaire d'appel un appel de l'un de la pluralité de types, comprenant :
(a) des moyens destinés à sélectionner pour la gestion par le gestionnaire d'appel un appel d'un type pour lequel le gestionnaire d'appel présente la meilleure note caractéristique de performances,
(b) des moyens sensibles à l'achèvement (200) de la gestion de l'appel sélectionné par le gestionnaire d'appel, destinés à évaluer (204-206). les performances du gestionnaire d'appel dans la gestion de l'appel sélectionné ; et
(c) des moyens destinés à modifier la note caractéristique de performances du gestionnaire d'appel conformément à l'évaluation des performances du gestionnaire d'appel dans la gestion de l'appel,
**caractérisé en ce que**
les moyens de sélection comprennent :
des moyens destinés à extraire (608 ; 808) d'un profil de service (500-502) du gestionnaire d'appel, comprenant des valeurs présentes d'une pluralité de métriques de service pour la pluralité de types d'appels, les métriques de service pour chaque type d'appel ayant des appels disponibles (802) pour la gestion par le gestionnaire d'appel,
des moyens destinés à obtenir (610 ; 807, 810) une note caractéristique de performances pour chaque type d'appel en utilisant les valeurs présentes extraites de la pluralité de métriques de service de chacun des types d'appels dans l'une d'une pluralité de formules correspondant chacune à un type d'appel différent, et
des moyens de sélection (612 ; 812) de l'un des appels disponibles dont le type d'appel a la meilleure note, pour la gestion par le gestionnaire d'appel ; et
les moyens de modification comprennent :
des moyens de modification (208-210) des valeurs des métriques de service du gestionnaire d'appel pour le type d'appel de l'appel sélectionné conformément à l'évaluation des performances du gestionnaire d'appel lors de la gestion de l'appel sélectionné pour obtenir de nouvelles valeurs présentes des métriques de service pour le type d'appel de l'appel sélectionné pour le gestionnaire d'appel.

10. Appareil suivant la revendication 9, apte à exécuter le procédé suivant l'une des revendications 1 à 8.
